# EUROPEAN PATENT APPLICATION

(11) **EP 1 241 871 A2**
(43) Date of publication of application: **18.09.2002**
(21) Application number: 02001260.5
(22) Date of filing: 17.01.2002
(51) Int. Cl.: H04N 1/60

(54) **Image file creation and output method, apparatus and computer program product**

(30) Priority: 17.01.2001 JP 2001008866; 09.02.2001 JP 2001034522; 18.07.2001 JP 2001217914
(71) Applicant: SEIKO EPSON CORPORATION, Shinjuku-ku, Tokyo 163-0811 (JP)
(72) Inventor: Nakajima, Yasumasa, c/oSeiko Epson Corporation, Suwa-shi, Nagano-ken, 392-8502 (JP); Suenaga, Kazunori, c/oSeiko Epson Corporation, Suwa-shi, Nagano-ken, 392-8502 (JP)
(74) Representative: Winter, Brandl, Fürniss, Hübner, Röss, Kaiser, Polte Partnerschaft

(57) **Abstract**

When a memory card MC is inserted into a slot, a control circuit of a color printer acquires and analyzes graphics processing control information GC from the memory card MC. A CPU corrects standard values for image quality parameters indicating properties of graphics data, to reflect the graphics processing control information GC. The CPU corrects image quality parameters to bring them into approximation with the corrected standard values, and adjusts image quality of the graphics data to reflect the corrected image quality parameters.

## Description

### BACKGROUND OF THE INVENTION

### Field of the Invention

The present invention relates to image adjusting apparatuses, computer program product and methods for adjusting image quality of graphics files.

### Discussion of the Background

Input devices such as digital still cameras (DSC) and digital video cameras (DVC) feature include, in addition to an Auto shooting mode, a scene setting function whereby effects for a particular shooting situation can be appended to photograph data when the DVC creates graphics data. Thus, when shooting an evening scene, for example, the Auto shooting mode will automatically correct the image so as to reduce redness, in Evening mode, redness will be preserved in the resulting image.

However, as recognized by the present inventors, the scene setting function of conventional digital still cameras and other input devices is only effective for the digital still camera used to shoot the picture; printers or other output devices are not provided with information indicating whether scene settings have been made. Even if a printer were provided with information about the presence of scene settings, conventional printers are not able to interpret such scene information. Thus, to date, even if the scene setting function has been used in a picture-shooting situation, effects created when snapping the shot are reduced by the automatic image quality adjustment function of a graphics retouching application or printer driver. This problem is not limited to DSCs, but is common to DVCs and other graphics file generating devices.

### SUMMARY OF THE INVENTION

It is an object of the present invention to solve the above-described and other problems associated with recording and faithfully producing an image of the recorded graphic on an output device.

It is also an object of the present invention to provide a mechanism for ensuring that a generation condition, which is in place when the graphics data is generated, is taken into account by a graphics processing device that performs the graphics processing on the data.

It is a further object of the present invention to enable graphics processing to be performed graphics data that accounts for the generation condition(s) present at the time the graphics data is generated.

The present invention, in a first aspect thereof, addresses these, and other, problems by providing a graphics data generating device for generating graphics data that is related to a graphics processing control parameter designating a graphics processing condition for graphics data. The graphics data generating device according to this first aspect includes: graphics data generating means for generating the graphics data; generation condition designating means for designating a generation condition during generation of the graphics data; storage means for storing a plurality of combinations, each the combination composed of a the generation condition and a plurality of the graphics processing control parameters; graphics processing control parameter acquiring means for acquiring from the storage means the plurality of graphics processing control parameters for the designated generation condition; and graphics data outputting means for relating the generated graphics data to the plurality of acquired graphics processing control parameters, and outputting the related graphics data.

According to the graphics data generating device of this first aspect, there can be generated graphics data that is related to a plurality of graphics processing control parameters designating a graphics processing condition for graphics data, whereby a generation condition at the time of generation of graphics data to be reflected in graphics processing by a graphics processing device.

The graphics data generating device of this first aspect may additionally comprise parameter value modifying means for modifying the value of any graphics processing control parameter among the plurality of acquired graphics processing control parameters. With this arrangement, it is possible to manipulate in a desired manner the value any graphics processing control parameter among the plurality of graphics processing control parameters acquired on the basis of a generation condition. It is also possible to include an additional graphics processing control parameter not included among the original parameters, rather than modifying the value of any of the graphics processing control parameters. With this arrangement, it is possible to achieve during graphics processing an effect, produced by the additional graphics processing control parameter, that could not otherwise be achieved on the basis of generation condition alone.

In a second aspect, the invention provides a graphics data generating device for generating graphics data that is related to a graphics processing control parameter set composed of a plurality of the graphics processing control parameters designating a graphics processing condition for graphics data. The graphics data generating device according to this second aspect includes: graphics data generating means for generating the graphics data; generation condition designating means for designating a generation condition during generation of the graphics data; graphics processing control parameter generating means for generating the graphics processing control parameter set on the basis of the generation condition; and graphics data outputting means for relating the generated graphics data to the generated graphics processing control parameter set, and outputting the related graphics data.

According to the graphics data generating device of this first aspect, there can be generated graphics data that is related to a graphics processing control parameter set generated on the basis of a designated generation condition, whereby a generation condition at the time of generation of graphics data to be reflected in graphics processing by a graphics processing device.

In a third aspect, the invention provides a graphics data generating device for generating graphics data that is related to graphics processing control information designating a graphics processing condition for graphics data. The graphics data generating device according to this third aspect includes: graphics data generating means for generating the graphics data; generation condition designating means for designating a generation condition during generation of the graphics data; storage means for storing a plurality of sets of the graphics processing control information, the information specifying a graphics processing control parameter set to be used for image processing of the graphics data, under the generation condition; graphics processing control information acquiring means for acquiring from the storage means the graphics processing control information for the designated generation condition; and graphics data outputting means for relating the generated graphics data to the acquired graphics processing control information, and outputting the related graphics data.

According to the graphics data generating device of this third aspect, there can be generated graphics data that is related to graphics processing control information designating a set of graphics processing control parameters to be used for graphics processing of graphics data, whereby a generation condition at the time of generation of graphics data to be reflected in graphics processing by a graphics processing device.

In the graphics data generating device pertaining to any of the first to third aspects herein, the graphics processing condition may be a condition for an output device that will output the graphics data. With this arrangement, graphics processing control parameters can be set on the basis of a particular combination of output device and graphics data generating device for generating graphics data.

In the graphics data generating device pertaining to any of the first to third aspects herein, graphics processing control parameters may include at least parameters relating to color space, gamma correction value, contrast, brightness, color balance, saturation, sharpness, color cast, and noise elimination. By including at least these parameters, graphics processing of graphics data can be performed properly.

In the graphics data generating device pertaining to any of the first to third aspects herein, the graphics data generating device may be a photographic device; and the generation condition may be a picture mode in the photographic device. The graphics data will include graphics processing control parameters for the picture mode. The graphics data may be included in one graphics file with the graphics processing control information.

In a fourth aspect, the invention provides a graphics processing device for performing graphics processing using graphics data that is related to a plurality of graphics processing control parameters designating a graphics processing condition for graphics data. The graphics processing device according to this fourth aspect includes: graphics data acquiring means for acquiring the data; graphics processing control parameter acquiring means for acquiring the plurality of graphics processing control parameters related to the acquired graphics data; and graphics processing means for graphics processing of the graphics data on the basis of the acquired plurality of graphics processing control parameters.

According to the graphics processing device which pertains to this fourth aspect, graphics processing of graphics data can be performed on the basis of a plurality of graphics processing control parameters related to the graphics data, so that graphics processing can be performed on the basis of a generation condition at the time of generation of graphics data.

In a fifth aspect, the invention provides a graphics processing device for performing graphics processing using graphics data that is related to graphics processing control information that specifies a graphics processing control parameter set composed of a plurality of graphics processing control parameters designating a graphics processing condition for graphics data. The graphics processing device according to this fifth aspect includes: graphics data acquiring means for acquiring the data; graphics processing control information acquiring means for acquiring the graphics processing control information related to the acquired graphics data; storage means for storing, in associated form, the graphics processing control information and the graphics processing control parameter set; graphics processing control parameter set acquiring means for acquiring the graphics processing control parameter set from the storage means on the basis of the acquired graphics processing control information; and graphics processing means for graphics processing of the graphics data on the basis of the acquired graphics processing control parameter set.

According to the graphics processing device which pertains to this fifth aspect, graphics processing of graphics data can be performed on the basis of a set of graphics processing control parameters acquired on the basis of graphics processing control information related to the graphics data, so that graphics processing can be performed on the basis of a generation condition at the time of generation of graphics data.

The graphics data generating device of the fourth or fifth aspect may additionally comprise output means for outputting graphics data subjected to such graphics processing. The graphics processing condition may be a condition for the output device.

In a sixth aspect, the invention provides a program for generating graphics data that is related to a graphics processing control parameter designating a graphics processing condition for graphics data. The program according to this sixth aspect executes by means of a computer: a function for generating the graphics data; a function for designating a generation condition during generation of the graphics data; a function for storing a plurality of combinations, each combination composed of a the generation condition and a plurality of the graphics processing control parameters; a function for acquiring from the storage means the plurality of graphics processing control parameters for the designated generation condition; and a function for relating the generated graphics data to the plurality of acquired graphics processing control parameters, and outputting the related graphics data.

The program pertaining to the sixth aspect herein affords working effects similar to those of the graphics data generating device of the first aspect herein. The program pertaining to the sixth aspect herein, like the graphics data generating device of the first aspect herein, may be embodied in a number of ways.

In a seventh aspect, the invention provides a program for generating graphics data that is related to graphics processing control information designating a graphics processing condition for graphics data. The program according to this seventh aspect executes by means of a computer: a function for generating the graphics data; a function for designating a generation condition during generation of the graphics data; a function for storing a plurality of sets of the graphics processing control information, the information specifying a graphics processing control parameter set to be used for image processing of the graphics data, under the generation condition; a function for acquiring from the storage means the graphics processing control information for the designated generation condition; and a function for relating the generated graphics data to the acquired graphics processing control information, and outputting the related graphics data.

The program pertaining to the seventh aspect herein affords working effects similar to those of the graphics data generating device of the third aspect herein. The program pertaining to the seventh aspect herein, like the graphics data generating device of the third aspect herein, may be embodied in a number of ways.

In an eighth aspect, the invention provides a program for performing graphics processing using graphics data that is related to a plurality of graphics processing control parameters designating a graphics processing condition for graphics data. The program according to this eighth aspect executes by means of a computer: a function for acquiring the data; a function for acquiring the plurality of graphics processing control parameters related to the acquired graphics data; and a function for graphics processing of the graphics data on the basis of the acquired plurality of graphics processing control parameters.

The program pertaining to the eighth aspect herein affords working effects similar to those of the graphics processing device of the fourth aspect herein. The program pertaining to the eighth aspect herein, like the graphics processing device of the fourth aspect herein, may be embodied in a number of ways. The graphics data and the plurality of graphics processing control parameters may be stored in one graphics file. In that case, the graphics data is acquired from the graphics file and the plurality of graphics processing control parameters is acquired from the graphics data.

In a ninth aspect, the invention provides a program for performing graphics processing using graphics data that is related to graphics processing control information that specifies a graphics processing control parameter set composed of a plurality of graphics processing control parameters designating a graphics processing condition for graphics data. The program according to this ninth aspect executes by means of a computer: a function for acquiring the data; a function for acquiring the graphics processing control information related to the acquired graphics data; a function for storing, in associated form, the graphics processing control information and the graphics processing control parameter set; a function for acquiring the graphics processing control parameter set from the storage means on the basis of the acquired graphics processing control information; and a function for graphics processing of the graphics data on the basis of the acquired graphics processing control parameter set.

The program pertaining to the ninth aspect herein affords working effects similar to those of the graphics processing device of the fifth aspect herein. The program pertaining to the ninth aspect herein, like the graphics processing device of the fifth aspect herein, may be embodied in a number of ways.

### BRIEF DESCRIPTION OF THE DRAWINGS

Figure 1 is an illustrative diagram of an exemplary graphics processing system for implementing a graphics processing device which pertains to a first embodiment of the present invention.
Figure 2 is a block diagram showing a simplified arrangement for a digital still camera capable of generating a graphics file (graphics data) for output by a graphics processing device pertaining to the first embodiment of the present invention.
Figure 3 is an illustrative diagram showing conceptually an exemplary internal structure for the graphics file employed in the first embodiment of the present invention.
Figure 4 is an illustrative diagram showing the general internal structure of a graphics file stored in the Exif file format of the present invention.
Figure 5 is an illustrative diagram of an exemplary data structure in the appended data storage area of a graphics file useable in the first embodiment of the present invention.
Figure 6 is a block diagram showing the general arrangement of color printer 20 pertaining to the first embodiment of the present invention.
Figure 7 is an illustrative diagram showing the internal arrangement of control circuit of color printer according to the present invention.
Figure 8 is a flow chart depicting generation of a graphics file by digital still camera according to the present invention.
Figure 9 is an illustrative diagram showing an exemplary display mode of liquid crystal display according to the present invention.
Figure 10 is an illustrative diagram showing an exemplary display mode of liquid crystal display according to the present invention.
Figure 11 is an illustrative diagram showing an exemplary display mode of liquid crystal display according to the present invention.
Figure 12 is a flow chart showing the processing routine for graphics processing by the color printer in the first embodiment of the present invention.
Figure 13 is a flow chart depicting the flow of graphics processing in the color printer in the first embodiment according to the present invention.
Figure 14 is an illustrative diagram showing exemplary combinations of picture mode, image quality parameters, and reference numbers designating picture mode according to the present invention.
Figure 15 is a flow chart showing the graphics processing routine in another embodiment of the present invention.
Figures 16-18 are descriptions of mathematical expressions used for describing conversion processes performed as part of the present invention.

### DESCRIPTION OF THE PREFERRED EMBODIMENTS

A more complete understanding of the present invention will be gained through the following description of the embodiments in the order indicated below, making reference to the accompanying drawings. The description that follows is arranged in the following 6 sections, A-F:
A. Arrangement of a graphics processing system
B. Arrangement of a graphics file
C. Arrangement of a graphics output device
D. Graphics processing in a digital still camera
E. Graphics processing in a printer
F. Other embodiments

### A. Arrangement of a graphics processing system

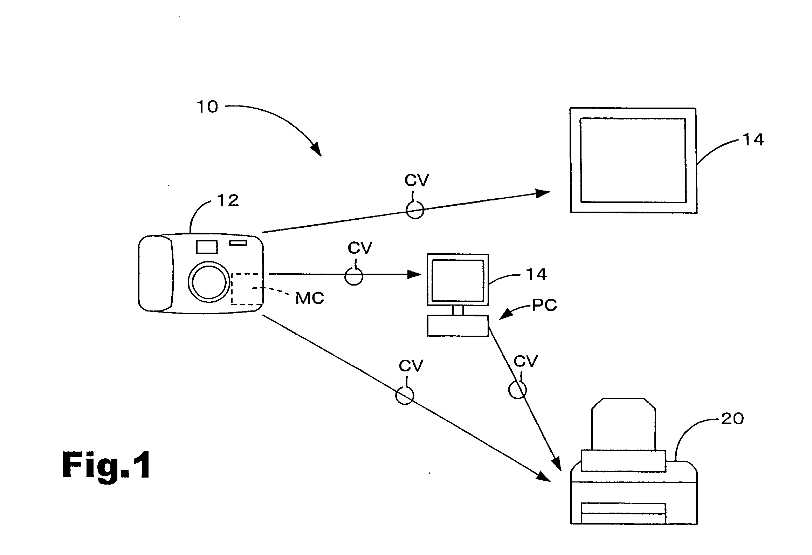

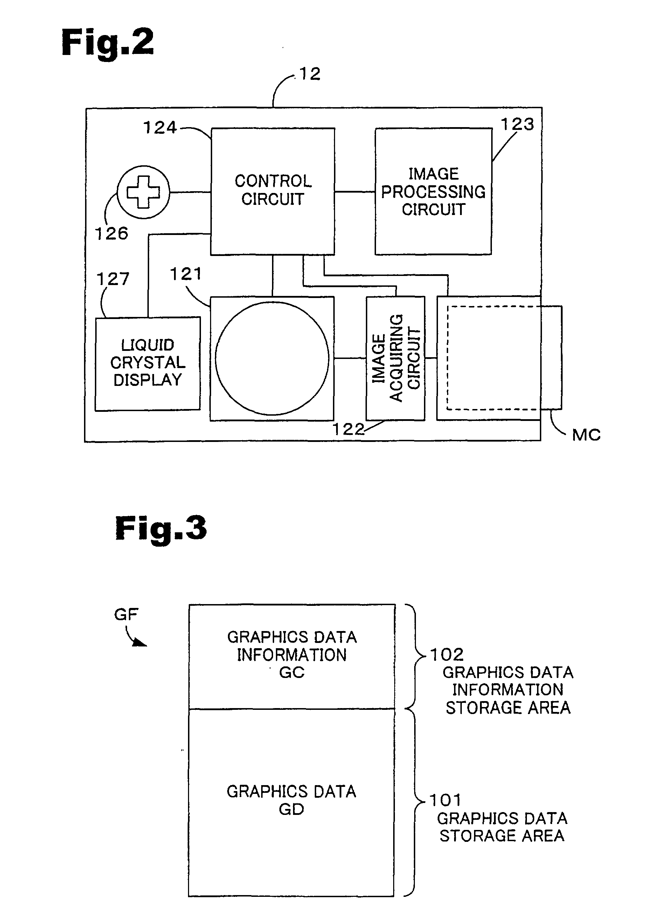

The following description of the arrangement of a graphics processing system for implementing a graphics processing device which pertains to a first embodiment of the invention initially makes reference to Figs. 1 and 2. Fig. 1 is an illustrative diagram of an exemplary graphics processing system for a graphics processing device which pertains to the first embodiment. Fig. 2 is a block diagram showing a simplified arrangement for a digital still camera capable of generating a graphics file (that holds graphics data) for output by a graphics processing device pertaining to the first embodiment.

The graphics processing system 10 herein includes a digital still camera 12 serving as an input device for generating a graphics file, and a color printer 20 serving as an output device for graphics processing and image output on the basis of a graphics file generated by digital still camera 12. While the output device could be a monitor 14 (e.g., a CRT display or LCD display), a projector, or the like rather than a printer 20, the following description uses the color printer 20 as an exemplary output device.

Digital still camera 12 acquires an image by way of imaging optical information with a digital device (e.g. a CCD or photomultiplier); as shown in Fig. 2 it includes an optical circuit 121 equipped with a CCD, etc. for gathering optical information; an image acquiring circuit 122 for controlling optical circuit 121 in order to acquire an image; a graphics processing circuit 123 for processing the acquired digital image; and a control circuit 124 for controlling the various circuits, and equipped with memory. The digital still camera 12 stores the acquired image as digital data in a storage device, namely, a memory card MC. The format for storing graphics data in a digital still camera 12 is typically the JPEG format, but other storage formats could be employed, such as TIFF, GIF, BMP, or RAW format.

Digital still camera 12 is provided with a Select/Set button 126 for setting brightness, contrast, exposure compensation (exposure compensation value), white balance, and other individual graphics processing control parameters, and for setting picture modes, each having a plurality of graphics processing control parameter value settings for a particular photographic condition; and with a liquid crystal display 127 for previewing photographed images and for setting the picture mode, etc., using the Select/Set button 126. A description of the processing of setting picture mode and image quality parameters using Select/Set button 126 and liquid crystal display 127 is provided hereinbelow.

The digital still camera 12 used in this graphics processing system 10 stores a graphics file GF--containing graphics data GD plus graphics processing control information GC for the graphics data--in a memory card MC. This graphics processing control information GC, together with graphics data GD created when the photo is taken, is automatically stored as a graphics file GF in memory card MC. Where the user has selected a picture mode (photographed scene) suitable for a particular photographic condition--i.e., portrait, night, or evening--the graphics processing control information GC in the graphics file GF stored in memory card MC will contain parameter values or parameter levels for the plurality of graphics processing control parameters for the selected picture mode. Naturally, graphics processing control parameters for exposure compensation, white balance etc. may be set individually.

When a picture mode has been set in digital still camera 12, exposure time during shooting, white balance, aperture, shutter speed, lens focal distance etc. are set uniformly with reference to the picture mode setting. Depending on the picture mode, the graphics processing control information will consist of parameter values or parameter levels for the group of corresponding graphics processing control parameters, and is stored together with the generated graphics data GD in a graphics file GF on memory card MC (or in a memory buffer if a wired, or wireless, communications link is used for transferring the data file from the DSC). Parameters and parameter values for each picture mode, associated with their corresponding picture modes, are held in memory in the control circuit 124 of digital still camera 12.

The graphics file GF generated by digital still camera 12 is sent to the color printer 20 via a cable CV and computer PC, or simply via a cable CV. Alternatively, the memory card MC on which the graphics file GF is stored in digital still camera 12 may be connected to printer 20 via a computer PC equipped with a memory card slot, or connected to printer 20 directly, to send the graphics file to printer 20. In the following description it is assumed that the memory card MC is connected directly to printer 20. The DSC 12 may also include an I/O port, such as a USB, IEEE 1394 port, or a wireless port, such as IR or RF, (e.g., Bluetooth compatible). When a "wired" communication channel is used (CV), such a coaxial cable, USB cable, or CAT 5 cable, for outputting the resulting image file, the propagated data signal is sent over the channel as an electric signal. When transmitted over a wireless channel, the propagated data signal is sent as an electromagnetic signal.

### B. Arrangement of a graphics file

The following description of the general arrangement of a graphics file employed in the present embodiment makes reference to Fig. 3. Fig. 3 is an illustrative diagram showing conceptually an exemplary internal structure for the graphics file employed in the present embodiment. Graphics file GF contains a graphics data storage area 101 for storing graphics data GD, and a graphics processing control information storage area 102 for storing graphics processing control information GC for reference and application during graphics processing of graphics data in the graphics processing device. Graphics data GD is stored, for example, in JPEG format, while graphics processing control information GC is stored in TIFF format. The terms "file structure," "data structure," and "storage area" in this working example means a file or data field configured to hold a digital representation of an image when a file or data, etc. is stored within a certain storage range of a storage device.

Graphics processing control information GC designates graphics processing conditions to be used for graphics processing of graphics data generated by a digital still camera 12 or other graphics data generating device, and, as noted, contains a set of graphics processing control parameters that are set automatically when picture mode is selected, or user-settable parameters such as those relating to exposure time, ISO speed, aperture, shutter speed and focal distance, as well as user-settable graphics processing control parameters such as exposure compensation, white balance, picture mode, and target color space.

The graphics file GF in this embodiment can be generated by way of a digital still camera 12, or by a digital video camera, scanner, or other input device (graphics file generating device). Where generated by a digital video camera, the generated file may be either a still video file containing static graphics data and output control information, or a motion video file containing motion video data (in MPEG format, for example) and output control information. Where a motion video file is used, output control is performed in response to output control information for some or all of the frames of the motion video.

The graphics file GF in the present embodiment basically includes the graphics data storage area 101 and graphics processing control information storage area 102 described above, and may have a file structure in accordance with an existing standardized file format. Compatibility of graphics file GF in the present embodiment with existing standardized file formats is described more specifically herein below.

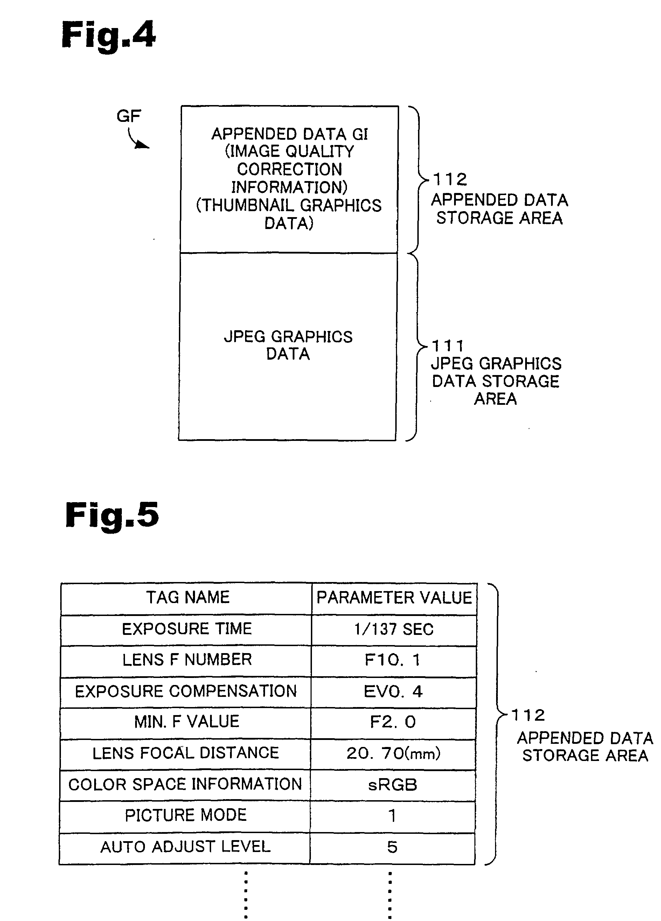

The graphics file GF in the present embodiment has a file structure in accordance with the graphics file format specification for digital still cameras (Exit), for example. The Exif specification was developed by the Japan Electronics and Information Technologies Industries Association (JEITA). The following description of general structure in the file where the graphics file GF in the present embodiment has a file format in accordance with the Exif file format makes reference to Fig. 4. Fig. 4 is an illustrative diagram showing the general internal structure of a graphics file GF stored in the Exif file format.

The Exif file, i.e. graphics file GFE, contains a JPEG graphics data storage area 111 for storing graphics data in JPEG format, and an appended data storage area 112 for storing appended data of various kinds relating to the stored JPEG graphics data. The JPEG graphics data storage area 111 corresponds to the graphics data storage area 101 mentioned earlier, and the appended data storage area 112 corresponds to the graphics processing control information storage area 102 mentioned earlier. The appended data storage area 112 contains graphics processing control information GC (image quality adjustment processing conditions) --i.e., date & time stamp, exposure, shutter speed, white balance, exposure compensation, target color space, etc.-- for reference when outputting a JPEG graphic. The appended data storage area 112 also contains, in TIFF format, thumbnail graphics data for the JPEG image stored in JPEG graphics data storage area 111. It is common knowledge to practitioners of the art that the Exif format uses tags to identify data of various kinds; on occasion data is referred to by its tag name.

The following description of the specifics of data structure in the appended data storage area 112 makes reference to Fig. 5. Fig. 5 is an illustrative diagram of an exemplary data structure in the appended data storage area 112 of a graphics file GF useable in the present embodiment.

As shown in the drawing, appended data storage area 112 contains parameter values for graphics processing control information GC, such as exposure time, lens F-number, exposure control mode, ISO speed, exposure compensation, white balance, flash, focal distance, and picture mode, stored according to predetermined addresses or offset values. On the output device side, addresses or offset values can be designated for desired information (parameters) so that graphics processing control information GC can be acquired. Graphics processing control information GC is stored in an undefined area in appended data storage area 112, a user-defined area available for the user.

### C. Arrangement of image output device

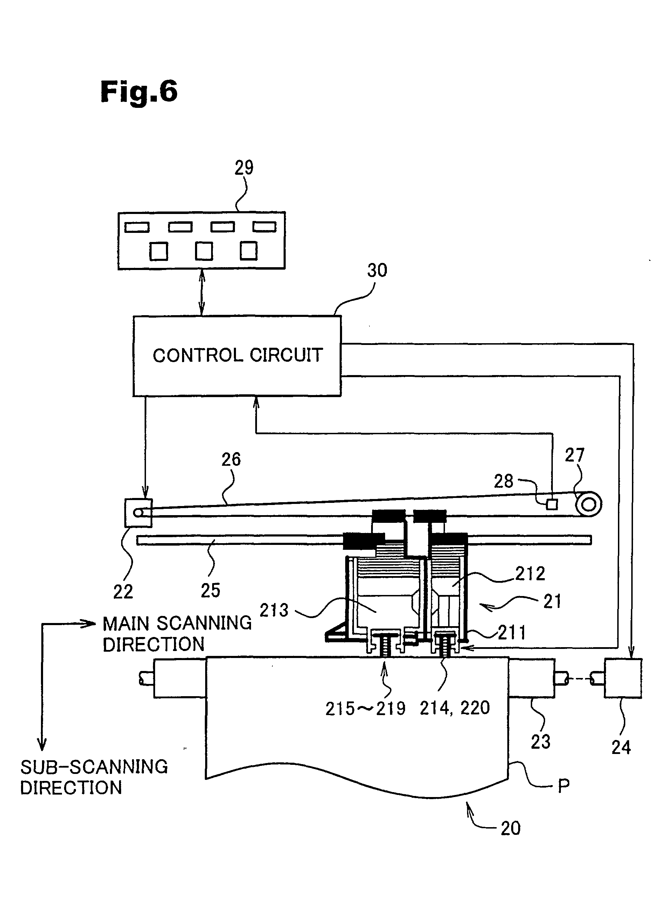

The following description of the general arrangement of the image output device pertaining to this embodiment, namely, color printer 20, makes reference to Fig. 6. Fig. 6 is a block diagram showing the general arrangement of color printer 20 pertaining to this embodiment.

Color printer 20 is capable of color image output, for example, an inkjet printer that forms images by jetting inks of four colors --for example, cyan (C), magenta (M), yellow (Y) and black (K)-- onto a print medium to produce a dot pattern image; or an electrophotographic printer that produces images by transferring and fixing color toner onto a print medium. In addition to the four colors listed above, light cyan (LC), light magenta (LM), or dark yellow (DY) may also be used.

As shown in the drawing, color printer 20 includes a mechanism for driving a print head 211 conveyed on a carriage 21 as it projects ink to produce dots; a mechanism for producing, by way of a carriage motor 22, reciprocating motion of carriage 21 in the axial direction of a platen 23; a mechanism for advancing the printer paper P by way of a paper feed motor 24; and a control circuit 30. The mechanism for producing reciprocal motion of carriage 21 in the axial direction of platen 23 includes a slide rail 25 extending parallel to the axis of platen 23, for slidably retaining cartridge 21; a pulley 27 having an endless drive belt 26 operating between it and carriage motor 22; and a position sensor 28 for sensing the home position of carriage 21. The mechanism for advancing printer paper P includes a platen 23; a paper feed motor 24 for turning platen 23; an auxiliary paper feed roller (not shown), and a gear train (not shown) for transmitting the rotation of paper feed motor 24 to platen 23 and the auxiliary paper feed roller.

Control circuit 30 exchanges signals with the control panel 29 of the printer in order to control appropriately the operation of paper feed motor 24, carriage motor 22, and print head 211. Printer paper P supplied to color printer 20 is arranged so as to be drawn between platen 23 and the auxiliary paper feed roller, and is advanced in predetermined increments depending on the angle of rotation of platen 23.

An ink cartridge 212 and an ink cartridge 213 are installed on carriage 21. Ink cartridge 212 contains black (K) ink, while ink cartridge 213 contains other inks, specifically, inks of the three colors, cyan (C), magenta (M), yellow (Y), plus light cyan (LC), light magenta (LM), and dark yellow (DY), for a total of six color inks.

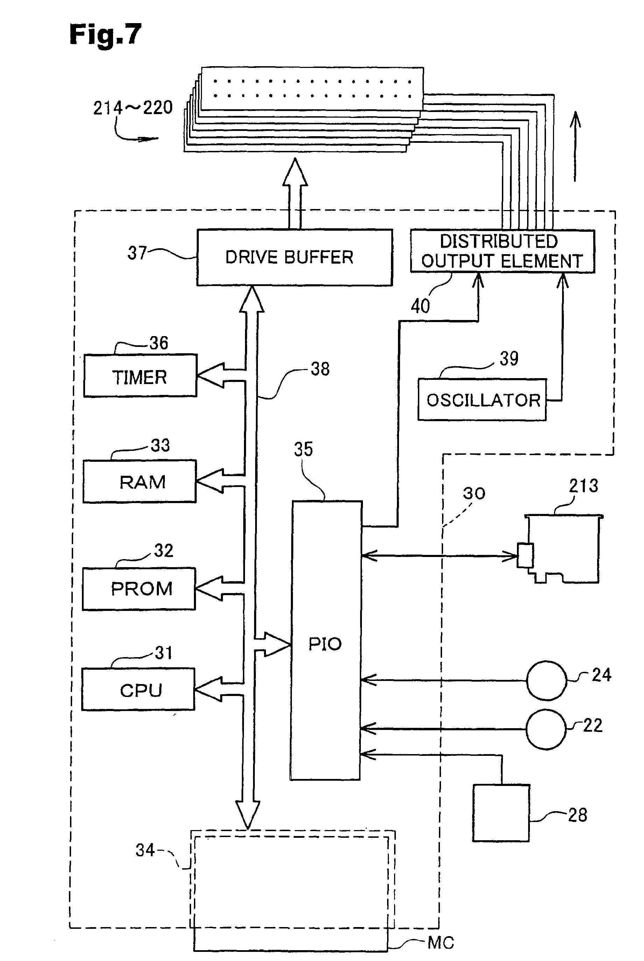

The internal arrangement of control circuit 30 of color printer 20 is now described with reference to Fig. 7. Fig. 7 is an illustrative diagram showing the internal arrangement of control circuit 30 of color printer 20. As shown in the drawing, control circuit 30 contains a CPU 31; PROM 32; RAM 33; a PCMCIA slot 34 for data interface with a memory card MC; a peripheral I/O portion (PIO) 35 for data interface with paper feed motor 24, carriage motor 22 etc.; a timer 36; a drive buffer 37; etc. Drive buffer 37 is used as a buffer for supplying dot ON/OFF signals to ink jet heads 214 -220. These are interconnected by way of a bus 38 to enable data interchange between them. Control circuit 30 additionally includes an oscillator 39 for outputting a drive waveform of predetermined frequency, and a distributed output element 40 for distributing the output of oscillator 39 to ink jet heads 214-220 under a predetermined timing arrangement.

Control circuit 30 reads out an image file GF from memory card MC, analyzes the graphics processing control information GC, and performs graphics processing on the basis of the analyzed graphics processing control information GC. Control circuit 30 outputs dot data to drive buffer 37 under a predetermined timing arrangement synchronized with operation of the paper feed motor 24 and carriage motor 22. The specifics of the graphics processing performed by control circuit 30 are discussed later.

### D. Graphics processing in a digital still camera

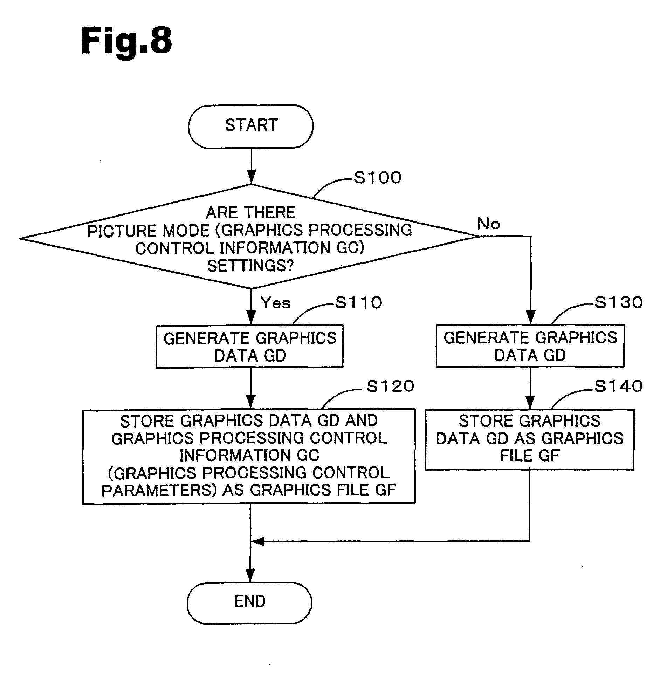

The following description of graphics processing in a digital still camera 12 makes reference to Fig. 8. Fig. 8 is a flow chart depicting generation of a graphics file GF by digital still camera 12.

The control circuit 124 of digital still camera 12 determines whether any picture mode (photographed scene) or graphics processing control information (graphics processing control parameters) --such as white balance or exposure compensation-- has been set by the user prior to shooting (STEP S100). Graphics processing control information settings are made by the user by operating the Select/Set button 126 to select from among preprogrammed picture modes displayed on liquid crystal display 127. Alternatively, the user may make settings by operating the Select/Set button 126 to set values of graphics processing control parameters, such as brightness or contrast, on liquid crystal display 127.

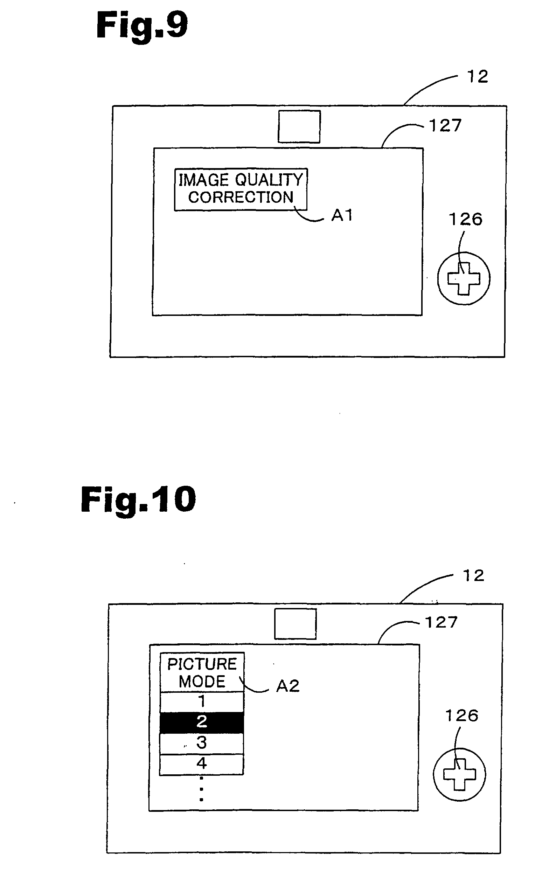

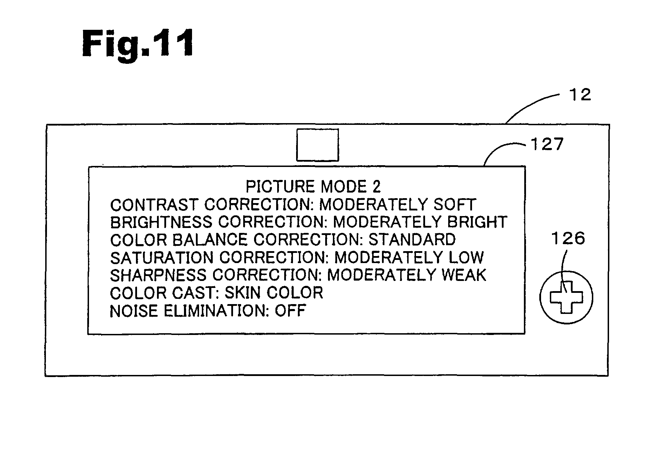

The following description of the process for setting graphics processing control parameters on liquid crystal display 127 using Select/Set button 126 makes reference to Figs. 9 to 11. Figs. 9 to 11 are illustrative diagrams showing exemplary display modes of liquid crystal display 127. When Select/Set button 126 is operated to select the "Graphics Processing Control" field A1 displayed on liquid crystal display 127 (see Fig. 9), a "Picture Mode" field A2 is displayed on liquid crystal display 127 (see Fig. 10). Picture mode is set using numbers 1, 2 .... For example, with the device set to any picture mode, settings for individual graphics processing control parameters for the selected picture mode are displayed on liquid crystal display 127, as shown in Fig. 11. In this example, graphics processing control parameter settings are displayed in a user-friendly way, but parameter values could be displayed instead.

If control circuit 124 determines that graphics processing control information GC has been set (STEP S100: Yes), it generates --in response to a shoot request, such as depression of the shutter button, for example--graphics data GD using parameter values defined by the set graphics processing control information (STEP S110). Control circuit 124 then stores on memory card MC a graphics file GF containing the generated graphics data GD and graphics processing control information GC including a set of graphics processing control parameters that have been set with reference to the picture mode (STEP S120). It then terminates the routine. Data generated by digital still camera 12 is converted from an RGB color space, to be represented in a YCbCr color space for storage on the memory card MC.

If, on the other hand, control circuit 124 determines that graphics processing control information GC has not been set (STEP S100: No), it generates graphics data GD in response to a shoot request (STEP S130). Control circuit 124 then stores on memory card MC a graphics file GF containing the generated graphics data GD and graphics processing control information GC including correction conditions appended automatically during creation of the graphics data (STEP S140), and then terminates the routine. As noted, this graphics processing control information GC is stored in a user-defined area in a file structure having a specific file format.

By means of the above process performed in digital still camera 12, the graphics file GF stored on memory card MC is provided with graphics data GD and with graphics processing control information GC that includes a plurality of graphics processing control parameters for the picture mode set at the time that the graphics data is generated.

### E. Image processing in color printer 20

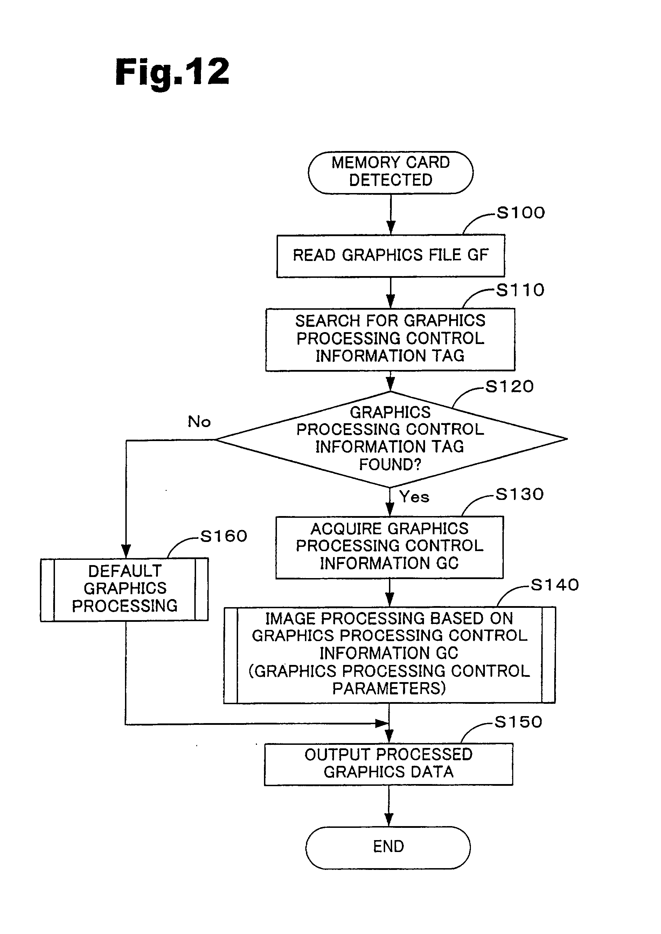

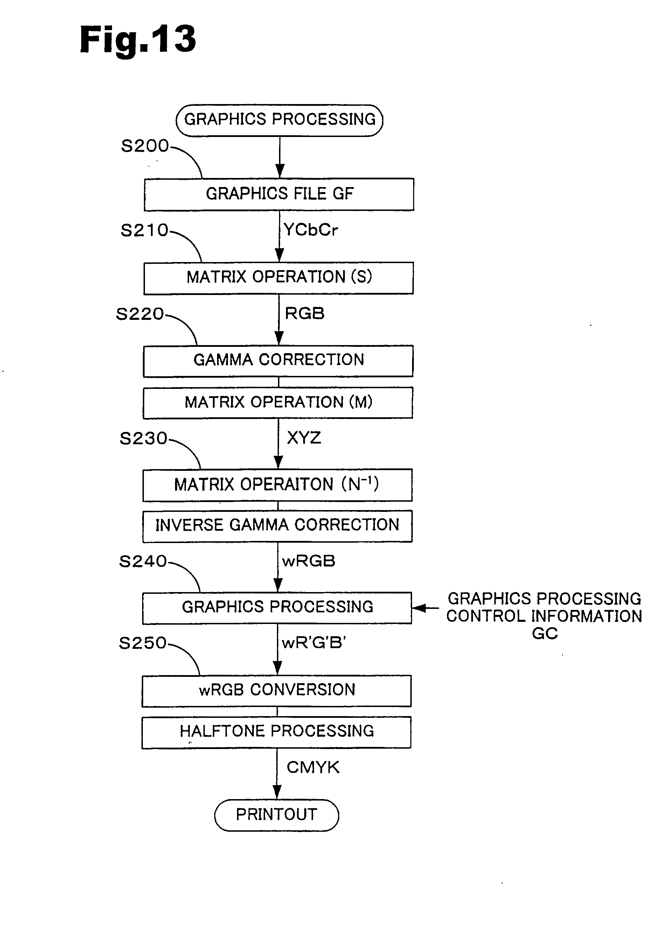

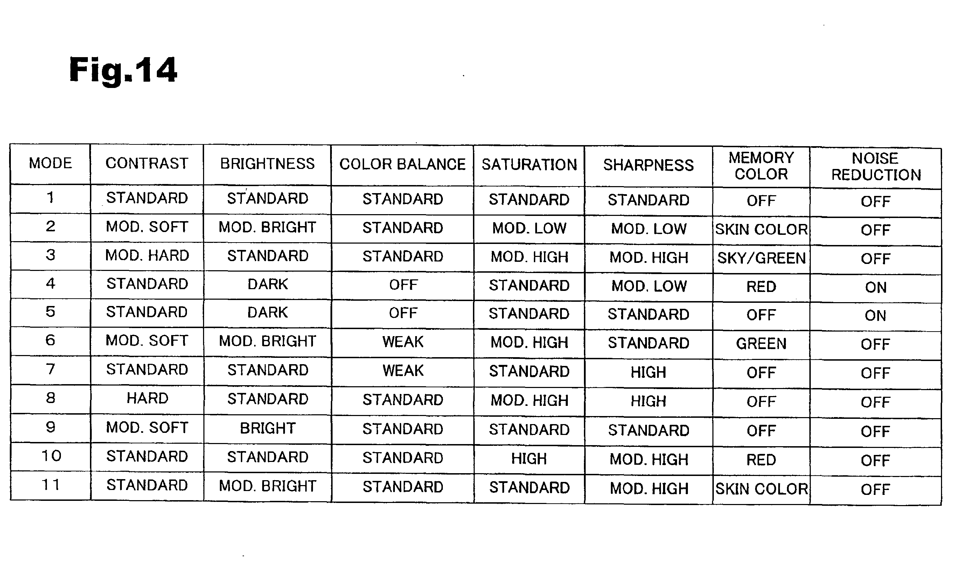

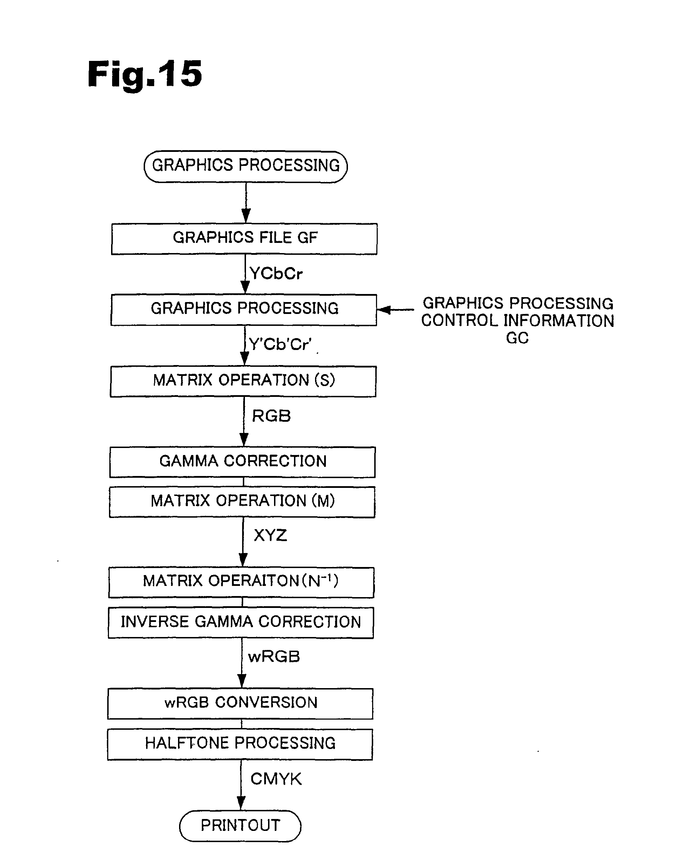

Image processing in color printer 20 pertaining to the present embodiment is now described with reference to Figs. 12 -15. Fig. 12 is a flow chart showing the processing routine for image processing by the color printer 20 pertaining to the present embodiment. Fig. 13 is a flow chart depicting the flow of image processing in color printer 20. Fig. 14 is an illustrative diagram showing the concept of automatic image quality adjustment processing in color printer 20. Fig. 15 is a flow chart showing the processing routine for automatic image quality adjustment in color printer 20. Graphics processing in the color printer 20 pertaining to the present embodiment involves first performing color space conversion, and then performing automatic image quality adjustment.

When a memory card MC is inserted into slot 34, the control circuit 30 (CPU 31) of color printer 20 reads out a graphics file GF from memory card MC, and temporarily places the graphics file GF in RAM 33 (STEP S100). CPU 31 searches in the appended information storage area 102 of the graphics file GF for graphics processing control information GC indicating information created at generation of the graphics data (STEP S110). If CPU 31 finds graphics processing control information (STEP S120: Yes), it acquires and analyzes the graphics processing control information GC created at generation of the graphics data (STEP S130). On the basis of the analyzed graphics processing control information GC, CPU 31 performs graphics processing, described in detail later (STEP S140), and prints out the processed graphics data (STEP S150).

If CPU 31 does not find graphics processing control information (STEP S120: No), since graphics processing control information created at generation of the graphics data cannot be reflected, color printer 20 performs default graphics processing using preset default values, i.e. parameter values, acquired from ROM 32 (STEP S160). CPU 31 prints out the processed graphics data (STEP S150) and terminates the routine.

The following description of image processing by color printer 20 makes reference to Fig. 13. The CPU 31 of color printer 20 extracts graphics data GD from the read out graphics file GD (STEP S200). As noted, digital still camera 12 stores graphics data as JPEG format files; to increase the compression ratio, graphics data in JPEG files is stored using a YCbCr color space.

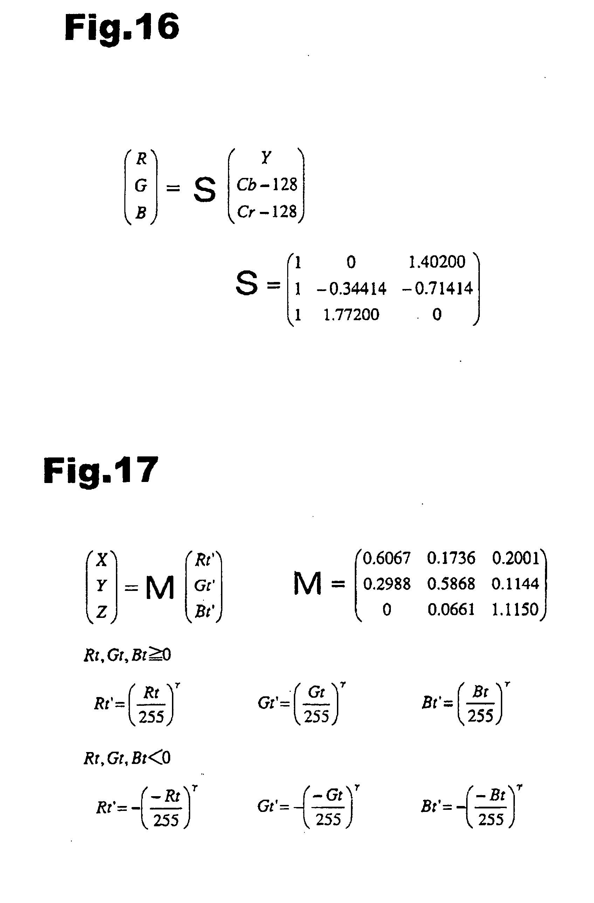

CPU 31 performs a 3 x 3 matrix operation S to convert YCbCr graphics data to RGB graphics data (STEP S210). Matrix operation S is given by the equation illustrated in Figure 16.

CPU 31 performs gamma correction and a matrix operation M on the RGB color space graphics data obtained in the preceding manner (STEP S220). During gamma correction, CPU 31 acquires the DSC gamma value from the graphics processing control information GC and uses the acquired gamma value for gamma conversion of the graphics data. Specifically, a gamma value is included among the graphics processing control parameters designated by graphics processing control information GC. Matrix operation M is an operation for converting an RGB color space to an XYZ color space. Since the graphics file GF used in the present embodiment can designate color space information to be used during graphics processing, if the graphics file GF does contain color space information, CPU 31 will refer to this color space information when performing matrix operation M, and will perform the matrix operation using a matrix (M) corresponding to the designated color space. Matrix operation M is given by the equation illustrated in Figure 17.

The color space of the graphics data GD derived from matrix operation M is the XYZ color space. In conventional practice, sRGB is the default color space used for image processing in printers and computers, so the native color space of digital still camera 12 cannot be utilized to full advantage. In the present embodiment, on the other hand, where graphics file GF includes color space information, the printer (printer driver) modifies the matrix (M) used for matrix operation M in accordance with this color space information. Accordingly, the native color space of digital still camera 12 can be utilized effectively, so as to achieve accurate color reproduction.

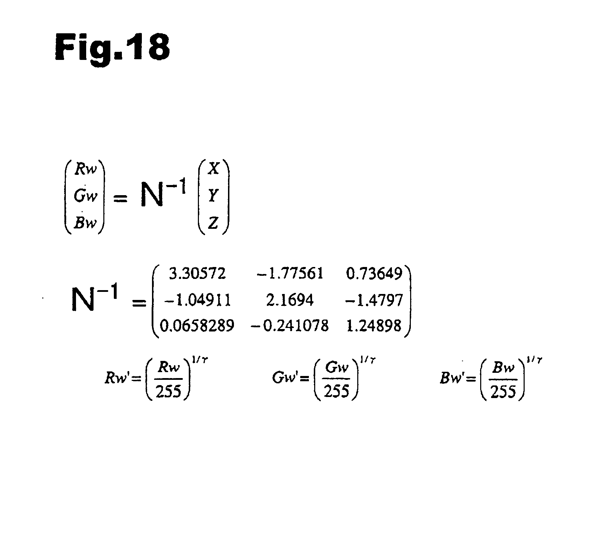

In order to perform image adjustment based on graphics processing control information GC, CPU 31 converts the color space of graphics data GD from the XYZ to the wRGB color space, i.e., it performs a matrix operation N⁻¹ and inverse gamma correction (STEP S230). The wRGB color space is wider than the sRGB color space. For inverse gamma correction, CPU 31 acquires from ROM 32 the default gamma value for the printer, and performs inverse gamma conversion on the graphics data using the inverse of the acquired gamma value. When performing matrix operation N⁻¹ CPU 31 uses a matrix (N⁻¹) --corresponding to conversion to the wRGB color space-- from ROM 31 to perform the matrix operation. Matrix operation N⁻¹ is given by the equation illustrated in Figure 18.

The color space of the graphics data GD derived from matrix operation N⁻¹ is the wRGB color space. As noted, this wRGB color space is wider than the sRGB color space, and corresponds to the color space of graphics data that can be generated by digital still camera 12.

CPU 31 performs graphics processing of graphics data based on the graphics processing control information GC (STEP S240). The following description of graphics processing based on graphics processing control information GC in the present embodiment makes reference to Fig. 14. Fig. 14 is an illustrative diagram depicting an exemplary relationship of mode numbers and levels of graphics processing control parameters corresponding to these mode numbers, stored in the PROM 32 etc. in the control circuit 30 of printer 20. As noted, the graphics file GF according to the present embodiment contains graphics data GD for graphics processing, and graphics processing control information GC for controlling graphics processing by printer 20. Color printer 20 (CPU 31) analyzes the graphics processing control information GC to acquire graphics processing control parameter values to be used in graphics processing.

In this embodiment, levels for the graphics processing control parameters that define picture modes are determined with reference to the reproducibility of graphics data GD by printer 20. Specifically, it is verified how a parameter level of "standard" or "moderately bright" for brightness will be interpreted by the control circuit 30 of printer 20, and the result of this verification is reflected in the parameter level setting. In this embodiment, picture mode is indicated by a reference number 1, 2 ... , and so CPU 31 analyzes the levels of individual graphics processing control parameters for each picture mode on the basis of reference number in order to determine the value for each graphics processing control parameter.

Graphics processing control parameters associated with different picture modes are now described with reference to Fig. 14. Picture Mode 1 is appropriate for a standard photographic condition, for example; Picture Mode 2 is appropriate for a photographic condition for portrait photography, for example; Picture Mode 3 is appropriate for a photographic condition for landscape photography, for example; Picture Mode 4 is appropriate for a photographic condition for evening photography, for example; Picture Mode 5 is appropriate for a photographic condition for night photography, for example; Picture Mode 6 is appropriate for a photographic condition for photographing flowers, for example; Picture Mode 7 is appropriate for a photographic condition for macro photography, for example; Picture Mode 8 is appropriate for a photographic condition for sports photography, for example; Picture Mode 9 is appropriate for a backlit photographic condition for example; Picture Mode 10 is appropriate for a photographic condition for photographing fall foliage, for example; and Picture Mode 11 is appropriate for a photographic condition for photographing souvenir snapshots, for example. If no picture mode is set, the parameter indicating the picture mode setting is set to "0".

CPU 31 performs graphics processing of the graphics data GD on the basis of the acquired graphics processing control parameter values. Where no picture mode has been designated, i.e. the picture mode parameter is set to "0", does not performs graphics processing of the graphics data GD with the graphics processing control parameter values discussed above.

After completing automatic image quality adjustment processing, CPU 31 performs wRGB conversion and halftone processing for printing (STEP S250). In the wRGB conversion process, CPU 31 refers to a lookup table (LUT) for CMYK color space conversion, associated with the wRGB color space and stored in ROM 31, and converts the graphics data from the wRGB color space to a CMYK color space. Specifically, graphics data consisting of R · G · B grayscale values is converted, for example, to grayscale data for each of six colors C · M · Y · K · LC · LM, used by the color printer 20.

In halftone processing, the color-converted graphics data is subjected to grayscaling. In the present embodiment, color-converted graphics data is represented as data having 256 shades for each color. In contrast, the color printer 20 in the embodiment can only assume one of two states: "print a dot" or "do not print a dot". That is, the color printer 20 herein can only produce two shades in a given location. Thus, 256-shade image data is converted into image data that the color printer 20 can represent using two shades. Representative methods for two-shade conversion (binarization) are the error diffusion technique and the systematic dithering technique.

In color printer 20, if, prior to color conversion, the resolution of graphics data is lower than the print resolution, new data lying between adjacent image data is generated by way of linear interpolation; if, conversely, it is higher than the print resolution, a resolution conversion process wherein data is divided by a certain ratio to convert the graphics data resolution to the print resolution is performed. Color printer 20 subjects graphics data converted to dot print/not print format to an interlacing process wherein the data is rearranged in the sequence in which it will be sent to the color printer 20.

According to the digital still camera 12 in the embodiment set forth hereinabove, graphics processing by the printer 20 can be controlled via picture mode settings made from digital still camera 12. That is, since picture modes are associated with certain graphics processing control parameters to be used in graphics processing, the levels or values of these graphics processing control parameters can be designated by setting the picture mode. It is therefore possible to set conditions for graphics processing of graphics data by printer 20 when taking a picture, so as to produce an output result that properly reflects the graphics processing control conditions desired when the picture is taken. Further, graphics processing control conditions assumed when taking a picture can be easily associated with the graphics data, and there is no need to again set graphics processing control conditions during graphics processing of graphics data, thereby facilitating graphics processing that reflects graphics processing control conditions.

According to the color printer 20 in the embodiment set forth hereinabove, graphics processing of graphics data GD can be performed in such away as to reflect graphics processing control information GC contained in the graphics file GF. Thus, graphics processing can be performed in a manner reflecting the picture mode (shooting environment) when the picture is taken, so as to reflect the photographic intent of the user. This solves a problem of the prior art, namely, failure to interpret the picture mode selected when a picture is taken, so that the photographic intent of the user is corrected in such a way that the result does not reflect this intent.

### F. Other Embodiments

In the preceding embodiment, all graphics processing is performed in the color printer 20 without the aid of a personal computer PC, and a dot pattern is produced on a print medium according to the graphics data GD generated thereby. However, all or a portion of the graphics processing could be performed on a computer, or on a server over a network (wired or wireless). This could be achieved by a graphics data processing application (program) --namely, a retouching application or printer driver-- installed on the hard disk etc. of a computer, and having a graphics processing function. A graphics file GF generated by digital still camera 12 is supplied to the computer via a cable, communication link, or memory card MC. The application is run on the computer under user control, whereupon the application reads the graphics file GF, analyzes the graphics processing control information GC, and converts and adjusts the graphics data GD. Alternatively, the application can be designed to run automatically when detecting insertion of a memory card MC or detecting attachment of a cable, whereupon the application reads the graphics file GF, analyzes the graphics processing control information GC, and converts and adjusts the graphics data GD automatically.

Whereas in the preceding embodiment, the graphics processing control information GC includes a reference number for the selected picture mode, and values for parameters are calculated from relationships of graphics processing control parameter levels to reference number in printer 20, graphics processing control information GC could directly describe graphics processing control parameter values. This may be accomplished by providing to digital still camera 12 a map indicating relationships of graphics processing control parameter levels to reference number provided to printer 20 (or personal computer PC). Alternatively, graphics processing control parameters could be generated automatically with reference to picture mode and actual shooting conditions (exposure, etc.).

Graphics processing by color printer 20 may be performed prior to automatic image quality adjustment, as shown in Fig. 20, with color space conversion being performed afterward. Basic information may be processed. During conversion of color space properties from the sRGB color space to the wRGB color space, it would be possible to employ a composite matrix (MN⁻¹) composed from matrix M and matrix N⁻¹ for the matrix operation. Any of various composite conversion matrices may be prepared if necessary. Composite matrices enable a series of matrix operations to be performed more rapidly.

While the preceding embodiment employs a color printer 20 as the output device, a display device such as a CRT, LCD, projector etc. could also be used as the output device. In this case, depending on the display device used as the output device, a graphics processing program (display driver) for executing the image processing described in Fig. 12, 13 etc., for example, could be used. Where the CRT etc. functions as a display device for a computer, the graphics processing program can be run on the computer. In this case the final output graphics data will have an RGB color space, not a CMYK color space.

Thus, in a manner analogous to reflecting in the print output of color printer 20 the picture mode at the time a photo is shot, it is possible to reflect in the display on a CRT or other display device the picture mode at the time a photo is shot. Thus, graphics data GD generated by a digital still camera 12 can be more correctly displayed.

Although the output device, graphics processing device, and program of the invention has been shown and described with respect to a certain preferred embodiment, this embodiment merely serves to facilitate understanding of the invention and should not be construed as limiting. It is obvious that equivalent alterations and modifications will occur to others skilled in the art without departing from the scope and spirit of the invention.

In the preceding embodiment, picture mode includes the parameters of light source, exposure compensation, target color space, brightness and sharpness, but it is an arbitrary decision which parameters will be used to define picture mode.

The parameter values given in the chart in Fig. 8 are merely exemplary and imply no limitation of the invention. Likewise, the matrix S, M and N⁻¹ values in the Equations are merely exemplary, and may be modified as appropriate with reference to target color space, the color space that can be handled by color printer 20, and other such considerations.

While the embodiment set forth herein describes a digital still camera 12 as the image file generating device, a scanner, digital video camera or the like may be used as well. Where a scanner is used, specification of data for inclusion in an image file GF may performed on a computer PC, or performed with the scanner independently by providing the scanner with preset buttons having assigned thereto preset information for setting information, or with a display screen and setting buttons for making optional settings.

While the preceding embodiment describes an Exif format file as a specific exemplary graphics file GF, the graphics file format herein is not limited thereto. It is possible to use any graphics file that contains graphics data generated by a graphics data generating device, and graphics processing control information GC designating graphics processing conditions for the graphics data. The use of such a file enables graphics processing to be performed appropriately for graphics data on the basis of graphics processing conditions set from a graphics file generating device, for output by an output device.

Graphics files GF that contain graphics data and output device control information Cl include files created by generating association data associated with output device control information Cl, and storing one, or a plurality of, sets of graphics data and graphics processing control information GC in separate files, so as to enable the graphics data and output device control information Cl to be associated by referring to the association data during graphics processing. While in this case graphics data and output device control information Cl are stored in separate files, during image processing using the output device control information Cl, the graphics data and output device control information Cl are indivisibly united, so functionality is substantially the same as with storage in a single file. That is, the use of associated graphics data and output device control information Cl --at least during graphics processing-- is included in the definition of "graphics file GF" herein. Motion video files stored on optical media such as CD-ROM, CD-R, DVD-ROM and DVD-RAM are also included.

The digital still camera 12 and color printer 20 used in the preceding embodiment are merely exemplary, and the arrangement thereof is not limited to that described in the embodiment. As regards the digital still camera 12, it is sufficient for the device to have, at a minimum, the function of generating the graphics file GF herein. As regards color printer 20, it is sufficient for the device to be capable, at a minimum, of analyzing picture mode (graphics processing control parameters) in the graphics file GF herein, and performing graphics processing of graphics data GD on the basis of the analysis.

Picture modes may include combinations with other modes. For example, for a picture taken in a given mode 1, the parameter value for sharpness may be increased or decreased depending on the photo resolution (graphics data resolution). Other conditions, such as the use of strobe photography, could be appended as well.

Obviously, numerous modifications and variations of the present invention are possible in light of the above teachings. For example, features described for certain embodiments may be combined with other embodiments described herein. It is therefore to be understood that within the scope of the appended claims, the invention may be practiced otherwise than as specifically described herein.

## Claims

1. A graphics data generating device for generating graphics data that is related to a graphics processing control parameter designating a graphics processing condition for graphics data, said graphics data generating device comprising:
an imaging device configured to generate said graphics data;
a selection mechanism configured to enable a selection of a generation condition when said imaging device generates said graphics data;
a memory configured to store a plurality of combinations, each combination composed of said generation condition and a plurality of said graphics processing control parameters;
an acquisition mechanism configured to acquire said plurality of graphics processing control parameters for said designated generation condition; and
a data output mechanism configured to relate said generated graphics data to said plurality of acquired graphics processing control parameters, and output the generated graphics data.

2. A graphics data generating device according to claim 1, further comprising:
a processor configured to modify a value of any graphics processing control parameter among said plurality of acquired graphics processing control parameters.

3. A graphics data generating device according to claim 1, wherein said graphics processing condition is a condition for an output device that will output said graphics data.

4. A graphics data generating device according to claim 1, wherein said graphics processing control parameters include at least parameters relating to color space, gamma correction value, contrast, brightness, color balance, saturation, sharpness, color cast, and noise elimination.

5. A graphics data generating device according to claim 1, wherein said graphics data generating device is a photographic device; and said generation condition is a picture mode in said photographic device.

6. A graphics data generating device for generating graphics data that is related to a graphics processing control parameter designating a graphics processing condition for graphics data, said graphics data generating device comprising:
means for generating said graphics data;
means for designating a generation condition when said means for generating generates said graphics data;
means for storing a plurality of combinations, each combination composed of said generation condition and a plurality of said graphics processing control parameters;
means for acquiring from said means for storing said plurality of graphics processing control parameters for said designated generation condition; and
means for relating said generated graphics data to said plurality of acquired graphics processing control parameters, and outputting the related graphics data.

7. A graphics data generating device according to claim 6, further comprising:
means for modifying a value of any graphics processing control parameter among said plurality of acquired graphics processing control parameters.

8. A graphics data generating device according to claim 6, wherein said graphics processing condition is a condition for an output device that will output said graphics data.

9. A graphics data generating device according to claim 6, wherein said graphics processing control parameters include at least parameters relating to color space, gamma correction value, contrast, brightness, color balance, saturation, sharpness, color cast, and noise elimination.

10. A graphics data generating device according to claim 6, wherein said graphics data generating device is a photographic device; and said generation condition is a picture mode in said photographic device.

11. A method for generating graphics data that is related to a graphics processing control parameter designating a graphics processing condition for graphics data, comprising steps of:
generating said graphics data;
designating a generation condition when said graphics data is generated in said generating step;
storing in a memory a plurality of combinations, each combination composed of said generation condition and a plurality of said graphics processing control parameters;
acquiring from said memory said plurality of graphics processing control parameters for said designated generation condition;
relating said generated graphics data to said plurality of acquired graphics processing control parameters; and
outputting the related graphics data.

12. A method according to claim 11, further comprising steps of:
modifying a value of any graphics processing control parameter among said plurality of acquired graphics processing control parameters.

13. A method according to any of claim 11, wherein said graphics processing condition is a condition for an output device that will output said graphics data.

14. A method according to claim 11, wherein said graphics processing control parameters include at least parameters relating to color space, gamma correction value, contrast, brightness, color balance, saturation, sharpness, color cast, and noise elimination.

15. A method according to claim 11, wherein said graphics data generating device is a photographic device; and said generation condition is a picture mode in said photographic device.

16. A graphics data generating device for generating graphics data that is related to a graphics processing control parameter set composed of a plurality of graphics processing control parameters designating a graphics processing condition for the graphics data, said graphics data generating device comprising:
an imaging device configured to generate said graphics data;
a selection mechanism configured to enable a selection of a generation condition when said imaging device generates said graphics data; and
a processor configured to generate said graphics processing control parameter set based on said generation condition, to relate said graphics data to said graphics processing control parameter set, and output the related graphics data.

17. A graphics data generating device according to claim 16, wherein said graphics processing condition is a condition for an output device that will output said graphics data.

18. A graphics data generating device according to claim 16, wherein said graphics processing control parameters include at least parameters relating to color space, gamma correction value, contrast, brightness, color balance, saturation, sharpness, color cast, and noise elimination.

19. A graphics data generating device according to claim 16, wherein said graphics data generating device is a photographic device; and said generation condition is a picture mode in said photographic device.

20. A graphics data generating device for generating graphics data being related to graphics processing control parameter set composed of a plurality of graphics processing control parameters designating a graphics processing condition for the graphics data, said device comprising:
means for generating said graphics data;
means for designating a generation condition when said means for generating generates said graphics data;
means for generating said graphics processing control parameter set based on said generation condition; and
means for relating said graphics data to said graphics processing control parameter set, and outputting the related graphics data.

21. A graphics data generating device according to claim 20 wherein said graphics processing condition is a condition for an output device that will output said graphics data.

22. A graphics data generating device according to claim 20, wherein said graphics processing control parameters include at least parameters relating to color space, gamma correction value, contrast, brightness, color balance, saturation, sharpness, color cast, and noise elimination.

23. A graphics data generating device according to claim 20, wherein said graphics data generating device is a photographic device; and said generation condition is a picture mode in said photographic device.

24. A method for generating graphics data that is related to a graphics processing control parameter set composed of a plurality of graphics processing control parameters designating a graphics processing condition for the graphics data, comprising steps of:
generating said graphics data;
designating a generation condition when said graphics data is generated in said generating step;
generating said graphics processing control parameter set based on said generation condition; and
relating said graphics data to said graphics processing control parameter set, and outputting the related graphics data.

25. A method according to claim 24 wherein said graphics processing condition is a condition for an output device that will output said graphics data.

26. A method according to claim 24, wherein said graphics processing control parameters include at least parameters relating to color space, gamma correction value, contrast, brightness, color balance, saturation, sharpness, color cast, and noise elimination.

27. A method according to claim 24, wherein said graphics data generating device is a photographic device; and said generation condition is a picture mode in said photographic device.

28. A graphics data generating device for generating graphics data that is related to graphics processing control information designating a graphics processing condition for graphics data, said graphics data generating device comprising:
an imaging device configured to generate said graphics data;
a selection mechanism configured to enable a selection of a generation condition when said imaging device generates said graphics data;
a memory configured to store a plurality of sets of said graphics processing control information, the graphics processing control information specifying a graphics processing control parameter set to be used for image processing of said graphics data, under said generation condition;
an acquisition mechanism configured to acquire said graphics processing control information for said designated generation condition; and
a data output mechanism configured to relate said generated graphics data to said acquired graphics processing control information, and output the related graphics data.

29. A graphics data generating device according to claim 28 wherein said graphics processing condition is a condition for an output device that will output said graphics data.

30. A graphics data generating device according to claim 28, wherein said graphics processing control parameters include at least parameters relating to color space, gamma correction value, contrast, brightness, color balance, saturation, sharpness, color cast, and noise elimination.

31. A graphics data generating device according to claim 28, wherein said graphics data generating device is a photographic device; and said generation condition is a picture mode in said photographic device.

32. A graphics data generating device for generating graphics data that is related to graphics processing control information designating a graphics processing condition for graphics data, said graphics data generating device comprising:
means for generating said graphics data;
means for designating a generation condition when said means for generating generates said graphics data;
means for storing a plurality of sets of said graphics processing control information, the information specifying a graphics processing control parameter set to be used for image processing of said graphics data, under said generation condition;
means for acquiring from said means for storing said graphics processing control information for said designated generation condition; and
means for relating said generated graphics data to said acquired graphics processing control information, and outputting the related graphics data.

33. A graphics data generating device according to claim 32 wherein said graphics processing condition is a condition for an output device that will output said graphics data.

34. A graphics data generating device according to claim 32, wherein said graphics processing control parameters include at least parameters relating to color space, gamma correction value, contrast, brightness, color balance, saturation, sharpness, color cast, and noise elimination.

35. A graphics data generating device according to claim 32, wherein said graphics data generating device is a photographic device; and said generation condition is a picture mode in said photographic device.

36. A method for generating graphics data that is related to graphics processing control information designating a graphics processing condition for graphics data, comprising steps of:
generating said graphics data;
designating a generation condition when said graphics data is generated in said generating step;
storing in a memory a plurality of sets of said graphics processing control information, the information specifying a graphics processing control parameter set to be used for image processing of said graphics data, under said generation condition;
acquiring from said memory said graphics processing control information for said designated generation condition;
relating said generated graphics data to said acquired graphics processing control information; and
outputting the related graphics data.

37. A method according to claim 36 wherein, said graphics processing condition is a condition for an output device that will output said graphics data.

38. A method according to claim 36, wherein said graphics processing control parameters include at least parameters relating to color space, gamma correction value, contrast, brightness, color balance, saturation, sharpness, color cast, and noise elimination.

39. A method according to claim 36, wherein said graphics data generating device is a photographic device; and said generation condition is a picture mode in said photographic device.

40. A graphics processing device for performing graphics processing on graphics data that is related to a plurality of graphics processing control parameters designating a graphics processing condition for graphics data, said graphics processing device comprising:
a processor configured to
acquire said graphics data,
acquire said plurality of graphics processing control parameters related to said acquired graphics data, and
perform graphics processing on said graphics data based on the plurality of graphics processing control parameters acquired by said processor.

41. A graphics processing device according to claim 40, further comprising
an output port configured to output said graphics-processed graphics data.

42. A graphics processing device according to claim 40, wherein:
said graphics processing condition is a condition effecting an operation of said output device.

43. A graphics processing device for performing graphics processing on graphics data that is related to a plurality of graphics processing control parameters designating a graphics processing condition for graphics data, said graphics processing device comprising:
means for acquiring said graphics data;
means for acquiring said plurality of graphics processing control parameters related to said acquired graphics data; and
means for performing graphics processing on said graphics data based on the plurality of graphics processing control parameters acquired by said means for acquiring said plurality of graphics processing control parameters.

44. A graphics processing device according to claim 43, further comprising
means for outputting said graphics-processed graphics data.

45. A graphics processing device according to claim 43, wherein:
said graphics processing condition is a condition effecting an operation of said output device.

46. A method for performing graphics processing on graphics data that is related toa plurality of graphics processing control parameters designating a graphics processing condition for graphics data, comprising steps of:
acquiring said graphics data;
acquiring said plurality of graphics processing control parameters related to said acquired graphics data; and
performing graphics processing on said graphics data based on the plurality of graphics processing control parameters acquired in said step of acquiring said plurality of graphics processing control parameters.

47. A method according to claim 46, further comprising a step of:
outputting said graphics-processed graphics data.

48. A graphics processing device according to claim 46, wherein:
said graphics processing condition is a condition effecting an operation of said output device.

49. A graphics processing device for performing graphics processing on graphics data that is related to graphics processing control information that specifies a graphics processing control parameter set composed of a plurality of graphics processing control parameters designating a graphics processing condition for graphics data, said graphics processing device comprising:
a processor configured to
acquire said graphics data, and
acquire said graphics processing control information related to said acquired graphics data;
a memory configured to store, in associated form, said graphics processing control information and said graphics processing control parameter set, wherein
said processor is configured to acquire said graphics processing control parameter set from said memory based on said acquired graphics processing control information, and
perform graphics processing on said graphics data based on said the graphics processing control parameter set acquired by said processor.

50. A graphics processing device according to 49 further comprising:
an output port configured to output said graphics-processed graphics data.

51. A graphics processing device according to claim 49, wherein:
said graphics processing condition is a condition for said output device.

52. A graphics processing device for performing graphics processing on graphics data that is related to graphics processing control information that specifies a graphics processing control parameter set composed of a plurality of graphics processing control parameters designating a graphics processing condition for graphics data, said graphics processing device comprising:
means for acquiring said graphics data;
means for acquiring said graphics processing control information related to said acquired graphics data;
means for storing, in associated form, said graphics processing control information and said graphics processing control parameter set;
means for acquiring said graphics processing control parameter set from said means for storing based on the graphics processing control information obtained from said means for acquiring said graphics processing control information; and
means for performing graphics processing of said graphics data based on the graphics processing control parameter set acquired by said means for acquiring said graphics processing control parameter set.

53. A graphics processing device according to claim 52, further comprising:
means for outputting said graphics-processed graphics data.

54. A graphics processing device according to claim 52, wherein:
said graphics processing condition is a condition for said output device.

55. A method for performing graphics processing on graphics data that is related to graphics processing control information that specifies a graphics processing control parameter set composed of a plurality of graphics processing control parameters designating a graphics processing condition for graphics data, comprising steps of:
acquiring said graphics data;
acquiring said graphics processing control information related to said acquired graphics data;
storing, in associated form in a memory, said graphics processing control information and said graphics processing control parameter set;
acquiring said graphics processing control parameter set from said memory based on the graphics processing control information; and
performing graphics processing of said graphics data based on the graphics processing control parameter set acquired in said step of acquiring said graphics processing control parameter set.

56. A method according to claim 55, further comprising a step of:
outputting said graphics-processed graphics data.

57. A method according to claim 56, wherein said graphics processing condition is a condition for said output device.

58. A computer-executable program for generating graphics data that is related to a graphics processing control parameter designating a graphics processing condition for graphics data, wherein said computer-executable program implements functions comprising:
generation of said graphics data;
designation of a generation condition during generation of said graphics data;
storage of a plurality of combinations, each combination being composed of said generation condition and a plurality of said graphics processing control parameters;
acquisition of said plurality of graphics processing control parameters for said designated generation condition;
relation of the graphics data to said plurality of acquired graphics processing control parameters; and
output of the related graphics data.

59. A computer-executable program for generating graphics data that is related to graphics processing control information designating a graphics processing condition for graphics data, wherein said computer-executable program implements functions comprising:
generation of said graphics data;
designation of a generation condition during generation of said graphics data;
storage of a plurality of sets of said graphics processing control information, the information specifying a graphics processing control parameter set to be used for image processing of said graphics data, under said generation condition;
acquisition of said graphics processing control information for said designated generation condition;
relation of said graphics data to said graphics processing control information; and
output of the related graphics data.

60. A computer-executable program for performing graphics processing using graphics data that is related to a plurality of graphics processing control parameters designating a graphics processing condition for graphics data, wherein said computer-executable program executes functions comprising:
acquisition of said data;
acquisition of said plurality of graphics processing control parameters related to said acquired graphics data; and
graphics processing of said graphics data based on said acquired plurality of graphics processing control parameters.

61. A computer-executable program for performing graphics processing using graphics data that is related to graphics processing control information that specifies a graphics processing control parameter set composed of a plurality of graphics processing control parameters designating a graphics processing condition for graphics data, wherein said computer-executable program performs functions comprising:
acquisition of said data;
acquisition of said graphics processing control information related to said acquired graphics data;
storage in memory, in associated form, said graphics processing control information and said graphics processing control parameter set;
acquisition of said graphics processing control parameter set from said memory based on said acquired graphics processing control information; and
graphics processing of said graphics data based on said acquired graphics processing control parameter set.
